# EUROPEAN PATENT APPLICATION

(11) **EP 2 779 135 A1**
(43) Date of publication of application: **17.09.2014**
(21) Application number: 13001239.6
(22) Date of filing: 12.03.2013
(51) Int. Cl.: G08C 15/00, H04B 7/185, H04Q 9/00, G01S 19/14

(54) **Telemetry and ranging signal transmission system and method of simultaneously transmitting telemetry and ranging signals**

(71) Applicant: Astrium GmbH, 82024 Taufkirchen (DE)
(72) Inventor: Floch, Jean-Jacques, D-81677 München (DE); Wendel, Jan, D-81373 München (DE)

(57) **Abstract**

A telemetry and ranging signal transmission system comprises a transmitter and a receiver, wherein a telemetry signal and a ranging signal are simultaneously transmitted from the transmitter to the receiver. The transmitter is adapted to combine a telemetry signal and a ranging signal to an integrated transmission signal; and the receiver is adapted to split the received integrated transmission signal into the telemetry signal and the ranging signal, wherein the demodulation of the ranging signal and the telemetry signal is carried out simultaneously.

## Description

### FIELD OF THE INVENTION

The present invention relates to a telemetry and ranging signal transmission system according to the preamble of claim 1. It is further directed to a method of simultaneously transmitting telemetry and ranging signals.

### BACKGROUND OF THE INVENTION

Up to now, either a ranging signal was transmitted with low data rate telemetry, or a high data rate telemetry signal was transmitted but without ranging. In that case, either parallel or serial operational modes were required to receive a high data rate telemetry signal and a ranging signal: In the parallel mode, basically two independent signals were used, e.g. on different carrier frequencies. In the serial operational mode, a time multiplexing was performed, i.e. in one time interval the telemetry signal was transmitted, and in another time interval the ranging signal was transmitted.

The non-patent document "Towards a new recommendation on GMSK/PN ranging", SLS-RFM_11-15, E. Vassallo and M. Visintin, November 2011 already describes a proposal of simultaneously transmitting telemetry and ranging signals. This solution, however, proposes to simultaneously transmit telemetry and ranging through a phase modulation. At receiver side, the receiver needs to decode the telemetry data before evaluating the ranging. For Deep Space application, this solution is very appropriate, however for real time navigation application, this solution cannot be applied.

### OBJECT OF THE INVENTION

The object of the present invention is to provide a telemetry and ranging signal transmission system which is less complex as well as a method of simultaneously transmitting telemetry and ranging signals which lead to reduced need for processing power and energy consumption. It is thus an aim of this invention is to allow transmitting simultaneously high rate telemetry and ranging signals.

### SUMMARY OF THE INVENTION

The first object is solved by a telemetry and ranging signal transmission system with the features of claim 1.

According to the invention the transmitter is adapted to combine a telemetry signal and a ranging signal to an integrated transmission signal and the receiver is adapted to split the received integrated transmission signal into the telemetry signal and the ranging signal, wherein the demodulation of the ranging signal and the telemetry signal is carried out simultaneously.

It is thus proposed in this solution to use only one operational mode to receive simultaneously a high rate telemetry signal and a ranging signal. This solution makes the transmitter and receiver less complex from the architecture point of view and less demanding in terms of CPU processing power and energy consumption.

It is additionally advantageous to exploit the ranging signal for providing synchronisation information to the demodulation of the telemetry signal, so that the bit error rate (BER) is decreased compared to a transmission of the same telemetry signal alone.

In a preferred embodiment the telemetry signal contains telemetry data, in particular telemetry data bits, and wherein the ranging signal contains ranging codes, in particular ranging code chips.

Further preferably the telemetry data and the ranging code chips are transmitted within an extended Offset Quadrature Phase-Shift Keying (OQPSK) channel as the integrated transmission signal.

It is advantageous when the delay offset varies between 0 and 1 chip.

In another preferred embodiment of the invention the power of the ranging code chips and the telemetry data are weighted. If the data are transmitted without CDMA codes, the data signal needs to be over the noise floor to be decoded. Therefore, the weight of the telemetry data needs to be adjusted in consequence.

If CDMA codes are also used for telemetry transmission, the weight of the telemetry data needs still to be adjusted with the Navigation data to allow the telemetry signal to be above the noise after correlation.

An alternative preferred embodiment is characterized in that the telemetry data and the ranging code chips are transmitted through a Gaussian Minimum Shift Keying (GMSK) signal as the integrated transmission signal.

In an advantageous further development of this embodiment the integrated transmission signal comprises an alternating sequence of ranging code chips and telemetry data bits according to a predetermined pattern.

Preferably one or more ranging code chips are followed by one or more telemetry data bits.

A preferred further development of the inventive telemetry and ranging signal transmission systems is characterized in that the receiver comprises a tracking receiver channel including carrier wipe-off, correlator, code and carrier discriminator, code/carrier loop filter, code/carrier NCO; and in that the receiver comprises a telemetry data demodulation channel.

It is advantageous when wherein the receiver is adapted to filter and to digitize the received integrated transmission signal, to perform an acquisition to evaluate the Phase Doppler and to synchronize a code chip received with a reference chip generated in the receiver, and to provide the tracking phase, the carrier phase and the code synchronisation to the data telemetry demodulation channel.

Alternatively, it is advantageous when the receiver is adapted to filter and to digitize the received integrated transmission signal, to thereupon filter the signal with a Gaussian Minimum Shift Keying (GMSK) C0 filter to evaluate the eye diagram for the ranging sample selection for the tracking, and to provide the tracking phase, the carrier phase and the code synchronisation to the data telemetry demodulation channel; or, further alternatively, when the receiver is adapted to filter and to digitize the received integrated transmission signal, to thereupon filter the signal with a Gaussian Minimum Shift Keying (GMSK) C0 filter, to apply a complete acquisition, over each sample of each chip, to select the optimized ranging samples, using as COST function the minimization of the correlation loss, and to provide the tracking phase, the carrier phase and the code synchronisation to the data telemetry demodulation channel.

In another preferred embodiment the synchronisation information obtained from tracking the ranging signal is exploited to sample the telemetry data signal synchronous with the telemetry data bits.

It is also advantageous when the telemetry data are encoded or an interleaving is performed with the telemetry data before they are integrated with the range signal data to the integrated transmission signal.

The object directed to the method is solved by the method of simultaneously transmitting telemetry and ranging signals with the features of claim 15.

In this invention, Code Division Multiple Access (CDMA) ranging codes are transmitted simultaneously with non spread telemetry data.

In a preferred embodiment of the method according to the invention a flexible CDMA code, preferably of different CDMA code length, is used for the Navigation Data and is included in the integrated transmission signal. The telemetry CDMA code length will vary depending on the desired telemetry data rate. This further development of the inventive method allows receiving the integrated transmission signal even under the noise floor level. It would decrease the data rate but improve the signal to noise ratio at receiver side.

The invention is hereinafter described by example with reference to the drawings. In these drawings
- **Fig. 1A**: A diagram of a first transmitter architecture in an embodiment of the telemetry and ranging signal transmission system according to the invention;
- **Fig. 1B**: A diagram of a second transmitter architecture in an embodiment of the telemetry and ranging signal transmission system according to the invention;
- **Fig. 1C**: A diagram of a third transmitter architecture in an embodiment of the telemetry and ranging signal transmission system according to the invention;
- **Fig. 1D**: A diagram showing the impulse responses in the transmitter shown in Fig. 1C;
- **Fig. 2A**: A diagram of a first receiver architecture in an embodiment of the telemetry and ranging signal transmission system according to the invention; and
- **Fig. 2B**: A diagram of a second receiver architecture in an embodiment of the telemetry and ranging signal transmission system according to the invention.

### DETAILED DESCRIPTION OF THE INVENTION

For the implementation of this invention, two options are proposed:
1. The telemetry data and CDMA ranging codes are transmitted within an extended OQPSK (Offset Quadrature shift keying) channel. For the invention, the delay offset may vary between 0 and 1 chip. It is proposed to weight the power of the ranging code chips and the telemetry data in the modulated signal.
2. The non spread telemetry data and the CDMA ranging code are transmitted through a GMSK signal. Hereby, one or several ranging code chips are followed by one or several telemetry data bits, then followed again by one or several ranging code chips and so on, i.e. a mixing is performed between the ranging code chips and the telemetry data bits according to a certain pattern.

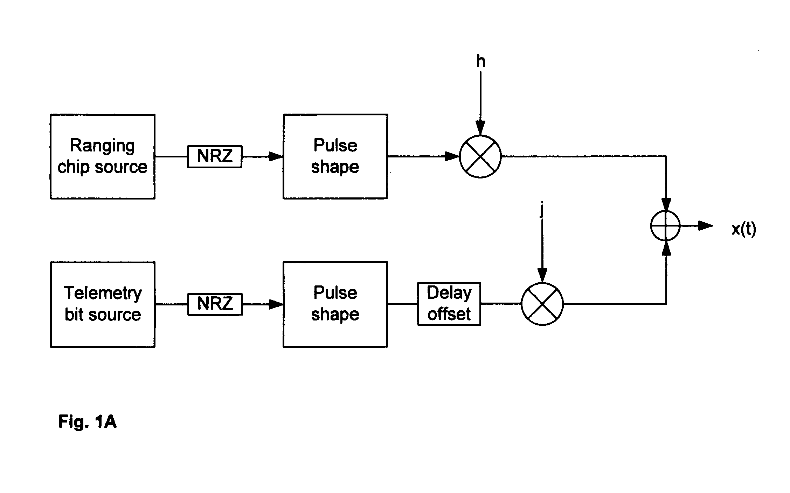

An illustration of the first option is shown in Fig. 1A. In this Figure, 'h' determines the power allocated to the ranging signal from the total power of the modulated signal. Its value varies between 0 and 1. The potential variation of the ranging signal power allows transmitting the telemetry data with a higher power. As an example, the telemetry data are transmitted on the imaginary channel and the ranging codes are transmitted on the real channel, but a different allocation is possible, too. In Fig. 1A and all other Figures, j is the basic imaginary unit sqrt(-1).

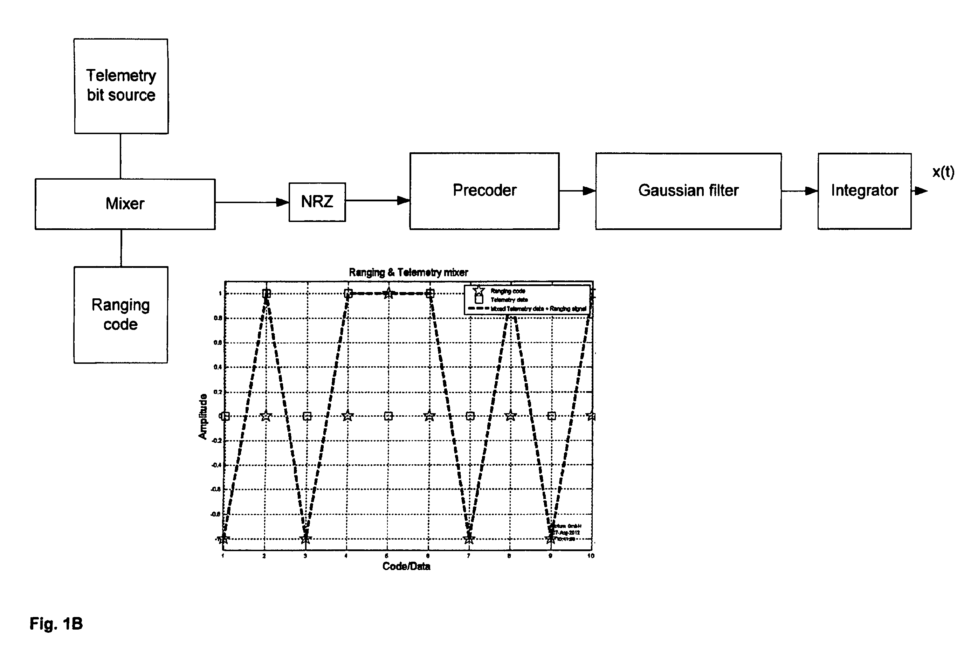

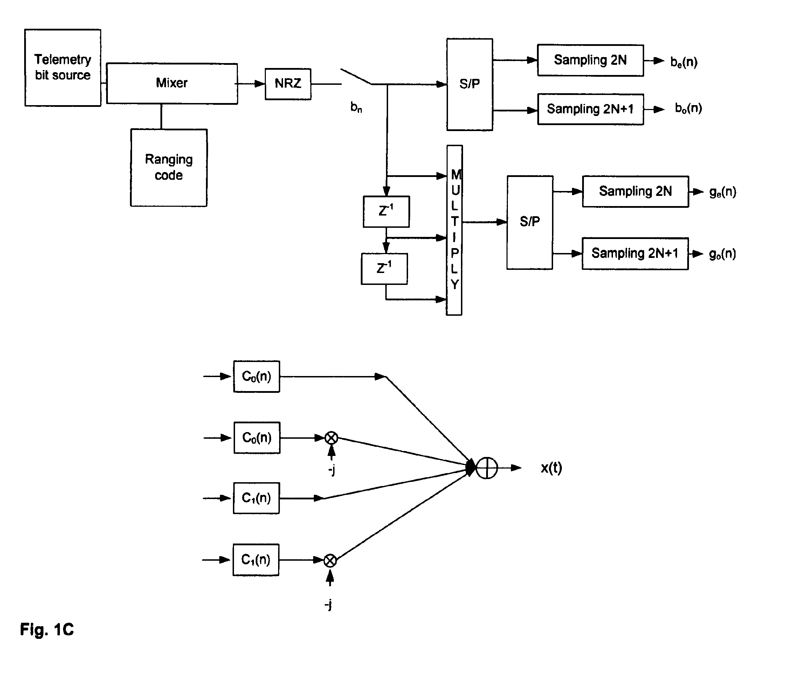

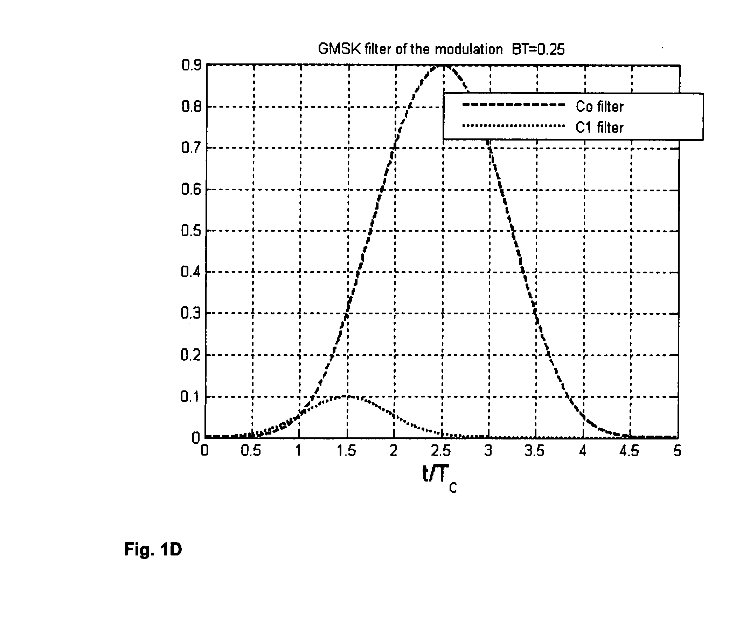

Illustrations of two different implementations of the second option are shown in Fig. 1 B and Fig. 1C. Both implementations start with the mixing of ranging code chips and telemetry data bits. Then, the resulting data stream is transmitted using the classic method for GMSK (Gaussian Minimum Shift Keying) modulation transmission as shown in Fig. 1 B, or using the Laurent decomposition method employing C0 and C1 filters (Fig. 1C). As an example, the impulse responses of these filters are shown in Fig. 1 D for a bandwidth time product of BT=0.25. Any other method for transmitting a GMSK modulation could be used, too. The use of GMSK ensures a good spectral efficiency and good property for multipath rejection.

For both options, the telemetry data can also be encoded (e.g. by Viterbi-coding, LDPC-coding (Low-Density-Parity-Check-coding), or Turbo-coding) to decrease the BER (Bit Error Rate), and/or an interleaving is performed. These standard techniques are very well known in the communication community.

At the receiver side, two receiver architectures are proposed corresponding to the two implementation options described above.

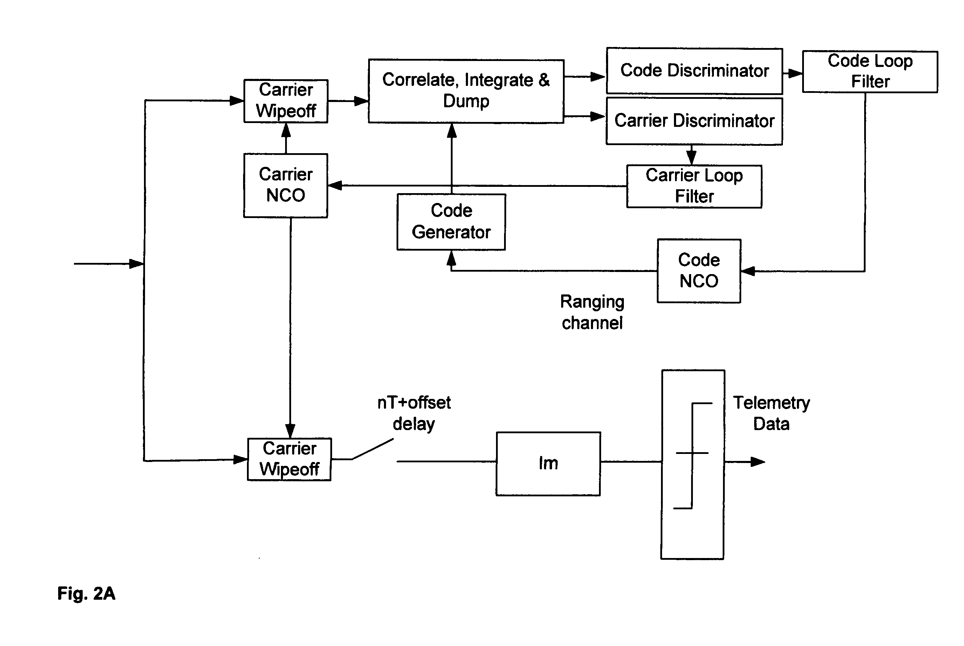

### 1. First option (Fig 2A)

The signal containing data telemetry and CDMA ranging codes are filtered and digitized. In Fig. 2A, only the base-band receiver architecture is described. First, an acquisition is performed to evaluate the Phase Doppler and to synchronize the code chip received with the referenced chip generated in the receiver.

The tracking receiver channel includes carrier wipe off, correlator, code and carrier discriminator, Code/Carrier loop filter and Code/Carrier NCO (Numerically Controlled Oscillator) as shown in the Fig. 2A.

During the tracking phase, the carrier phase and code synchronisation are provided to the data telemetry demodulation channel.

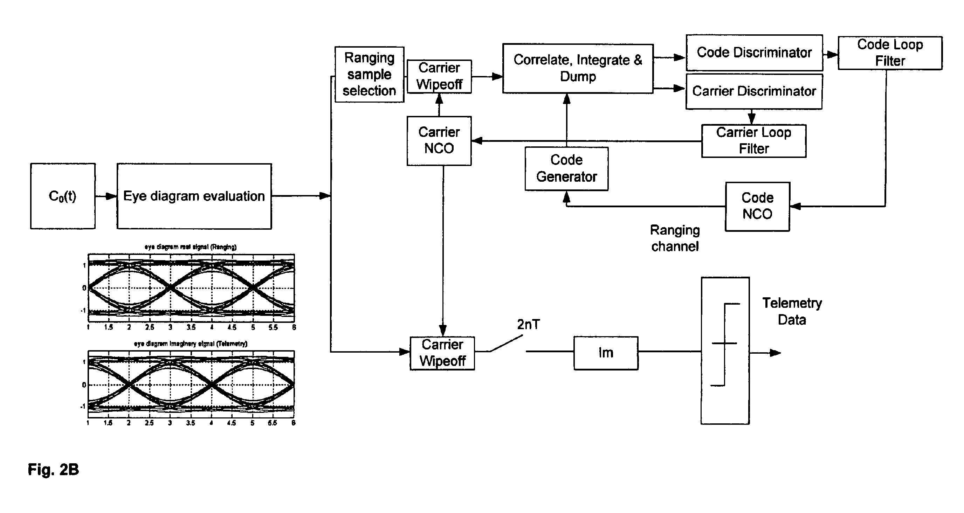

### 2. Second option (Fig 2B)

The signal containing data telemetry and CDMA ranging codes are filtered and digitized. In Fig. 2B, only the base-band receiver architecture is described. The signal is then filtered with the GMSK C0 filter.

As shown in Fig. 2B, it is proposed to evaluate the eye diagram for the ranging sample selection for the tracking. Another solution would be to apply a complete acquisition, over each sample of each chip, to select the optimized ranging samples, using as COST function the minimization of the correlation loss.

As in the first option, the tracking phase, the carrier phase and code synchronisation are provided to the data telemetry demodulation channel.

For both options, the synchronisation information obtained from tracking the ranging signal is exploited to sample the telemetry data signal synchronous with the telemetry data bits, i.e. the bit edges do not have to be determined by the demodulator, but are already known. Therefore, this implementation also provides a lower BER than compared to a demodulation of the telemetry data signal without this synchronisation information available.

This invention allows transmitting simultaneously high data rate telemetry and ranging signals. Possible receiver architectures which allow to track the ranging component of the transmitted signal and to demodulate the telemetry data component are given, but other architectures could be possible, too.

The transmitter and receiver architecture proposed to apply this invention is not demanding in terms of complexity or power energy consumption. The BER of the telemetry signal demodulation achieved by exploiting the synchronisation information obtained from tracking the ranging component is smaller than the BER that can be achieved without this synchronisation information.

With this approach, a service provider can offer to the user two types of service in real time. For instance, it can provide accurate image (high data rate) and position simultaneously. Any other application requiring high data rate telemetry and ranging is suitable for an implementation of this invention, too.

Reference numerals in the claims, in the description and in the drawings are provided only for a better understanding of the invention and shall not delimit the scope of protection which is defined by the wording and meaning of the claims.

## Claims

1. Telemetry and ranging signal transmission system comprising a transmitter and a receiver, wherein a telemetry signal and a ranging signal are simultaneously transmitted from the transmitter to the receiver; **characterized in that**
- the transmitter is adapted to combine a telemetry signal and a ranging signal to an integrated transmission signal; and
- the receiver is adapted to split the received integrated transmission signal into the telemetry signal and the ranging signal, wherein the demodulation of the ranging signal and the telemetry signal is carried out simultaneously.

2. Telemetry and ranging signal transmission system according to claim 1,
wherein the telemetry signal contains telemetry data, in particular telemetry data bits, and wherein the ranging signal contains ranging codes, in particular ranging code chips.

3. Telemetry and ranging signal transmission system according to claim 2,
wherein the telemetry data and the ranging code chips are transmitted within an extended Offset Quadrature Phase-Shift Keying (OQPSK) channel as the integrated transmission signal.

4. Telemetry and ranging signal transmission system according to claim 3,
wherein the delay offset varies between 0 and 1 chip.

5. Telemetry and ranging signal transmission system according to claim 3 or 4, wherein the power of the ranging code chips and the telemetry data are weighted.

6. Telemetry and ranging signal transmission system according to claim 2,
wherein the telemetry data and the ranging code chips are transmitted through a Gaussian Minimum Shift Keying (GMSK) signal as the integrated transmission signal.

7. Telemetry and ranging signal transmission system according to claim 6,
wherein the integrated transmission signal comprises an alternating sequence of ranging code chips and telemetry data bits according to a predetermined pattern.

8. Telemetry and ranging signal transmission system according to claim 7,
wherein one or more ranging code chips are followed by one or more telemetry data bits.

9. Telemetry and ranging signal transmission system according to one of the preceding claims,
wherein the receiver comprises a tracking receiver channel including carrier wipe-off, correlator, code and carrier discriminator, code/carrier loop filter, code/carrier NCO; and
wherein the receiver comprises a telemetry data demodulation channel.

10. Telemetry and ranging signal transmission system according to claim 9 and claims 3 to 5,
wherein the receiver is adapted
- to filter and to digitize the received integrated transmission signal;
- to perform an acquisition to evaluate the Phase Doppler and to synchronize a code chip received with a reference chip generated in the receiver and
- to provide the tracking phase, the carrier phase and the code synchronisation to the data telemetry demodulation channel.

11. Telemetry and ranging signal transmission system according to claim 9 and 6 to 8,
wherein the receiver is adapted
- to filter and to digitize the received integrated transmission signal;
- to thereupon filter the signal with a Gaussian Minimum Shift Keying (GMSK) C0 filter;
- to evaluate the eye diagram for the ranging sample selection for the tracking; and
- to provide the tracking phase, the carrier phase and the code synchronisation to the data telemetry demodulation channel.

12. Telemetry and ranging signal transmission system according to claim 9 and 6 to 8,
wherein the receiver is adapted
- to filter and to digitize the received integrated transmission signal;
- to thereupon filter the signal with a Gaussian Minimum Shift Keying (GMSK) C0 filter;
- to apply a complete acquisition, over each sample of each chip, to select the optimized ranging samples, using as COST function the minimization of the correlation loss; and
- to provide the tracking phase, the carrier phase and the code synchronisation to the data telemetry demodulation channel.

13. Telemetry and ranging signal transmission system according to claim 11 or 12, wherein the synchronisation information obtained from tracking the ranging signal is exploited to sample the telemetry data signal synchronous with the telemetry data bits.

14. Telemetry and ranging signal transmission system according to one of the preceding claims,
wherein the telemetry data are encoded or an interleaving is performed with the telemetry data before they are integrated with the range signal data to the integrated transmission signal.

15. A method of simultaneously transmitting telemetry and ranging signals wherein a telemetry signal and a ranging signal are combined to an integrated transmission signal;
wherein the integrated transmission signal is transmitted from the transmitter () to the receiver;
wherein the received integrated transmission signal is split into the telemetry signal and the ranging signal and
wherein the demodulation of the ranging signal and the telemetry signal is carried out simultaneously.

16. The method according to claim 15,
wherein the integrated transmission signal includes a flexible CDMA code, preferably of different CDMA code length, for the Navigation Data.
